# EUROPEAN PATENT SPECIFICATION

(11) **EP 2 196 100 B1**
(45) Date of publication and mention of the grant of the patent: **31.12.2014**
(21) Application number: 08739247.8
(22) Date of filing: 28.03.2008
(51) Int. Cl.: A23L 1/318, A23L 1/00

(54) **METHOD OF PRODUCING MATURED FOOD**
VERFAHREN ZUR HERSTELLUNG VON GEREIFTEN NAHRUNGSMITTELN
PROCÉDÉ DE PRODUCTION D'UN PRODUIT ALIMENTAIRE MATURÉ

(30) Priority: 10.10.2007 JP 2007264554
(43) Date of publication of application: 16.06.2010
(73) Proprietor: Hiroshima Prefecture, Hiroshima-shi, Hiroshima 730-8511 (JP)
(72) Inventor: SHIBATA, Kenya, Hiroshima 732-0816 (JP); SAKAMOTO, Koji, Hiroshima 732-0816 (JP); ISHIHARA, Masako, Hiroshima 732-0816 (JP); NAKATSU, Sayaka, Hiroshima 732-0816 (JP); KAJIHARA, Ryo, Hiroshima 732-0816 (JP)
(74) Representative: Minoja, Fabrizio
(86) International application number: PCT/JP2008/056129
(87) International publication number: WO 2009/047925

(56) References cited:
- WO-A1-01/58286
- WO-A1-2007/088918
- WO-A1-2008/029783
- JP-A- 5 007 476
- JP-A- 2007 204 413
- JP-A- 2007 252 323
- US-A- 4 754
- A CHIRALT ET AL: "Use of vacuum impregnation in food salting process", JOURNAL OF FOOD ENGINEERING, vol. 49, no. 2-3, 1 August 2001 (2001-08-01), pages 141-151, XP55041060, ISSN: 0260-8774, DOI: 10.1016/S0260-8774(00)00219-3
- FRANÇOIS DEUMIER ET AL: "Pulsed vacuum brining of poultry meat: interpretation of mass transfer mechanisms", JOURNAL OF FOOD ENGINEERING, vol. 58, no. 1, 1 June 2003 (2003-06-01), pages 85-93, XP55041064, ISSN: 0260-8774, DOI: 10.1016/S0260-8774(02)00367-9
- ZHAO Y ET AL: "Practical applications of vacuum impregnation in fruit and vegetable processing", TRENDS IN FOOD SCIENCE AND TECHNOLOGY, ELSEVIER SCIENCE PUBLISHERS, GB, vol. 15, no. 9, 1 September 2004 (2004-09-01), pages 434-451, XP004524117, ISSN: 0924-2244, DOI: 10.1016/J.TIFS.2004.01.008

## Description

### Technical Field

The present invention relates to a method for producing a matured food which is softened while retaining the original shape of a food material, including the step of uniformly impregnation inside of the food material with a degradative enzyme and a matured food to be obtained. More specifically, the present invention relates to a method for producing a matured food from an animal food material of which the taste, texture and flavor are improved and a matured food to be obtained.

### Background Art

An animal food material is rich in nutrients such as proteins and lipids, and it is a essential food material as an important energy source and nutrient source. The animal food material is, after slaughtered or captured, served as a foodstuff through an aging step. In the aging step, the structural change due to the resolution of post-rigor muscle and the proteolytic reaction due to an intrinsic enzyme occur, so that the texture of meat softens, and a taste component of a low molecular weight substance is concomitantly produced. Furthermore, by adding "flavor (savor)" and "appearance (shape)" to the above "softness" and "taste", "palatability" of the animal food material is produced. While a high-quality meat part is sometimes eaten raw as it is, the matured animal food material is normally cooked or processed for the purpose of sterilization, reduction of smell, further softening, seasoning and so on. In addition, it is sometimes refrigerated or frozen for the quality preservation.

Many food engineering processes for the purpose of meat softening or taste improvement have been reported. For example, as a treatment method relating to the softening of meat, a method of cutting the fibril by a mechanical operation such as hitting, a method of preventing excessive hardening and drying out of meat by low-temperature heating using vacuum cooking, a method of adding juiciness by the improvement in water retention using a meat quality improver or the like, a pressure and heat treatment method or the like have been suggested. However, the mechanical destruction changes the shape of the food material and the visual palatability is impaired. Also, the prevention of hardening or the improvement in juiciness by low-temperature heating does not provide a fundamental solution to the meat with much connective tissue protein (so-called, fibril). In addition, the improvement of water retention by an acid liquid seasoning has a problem such as leaving sourness, and a meat quality improver that improves water retention by salt concentration adjustment or protein addition has difficulty in degrading the connective tissue protein. Furthermore, the pressure and heat treatment has problems of shape deterioration, remaining cooked odor by high temperature heating, leaving the connective tissue protein, and so on.

An enzymatic method is known as a processing method to degrade a connective tissue protein that directly affects the hardness of animal food material. The reason why a fruit such as pineapple is served with pork is that an enzyme derived from pineapple has a function of softening meat. Using a ginger juice for the pretreatments of meat dishes also anticipates the function of an enzyme derived from ginger together with seasoning. Normally, in the food manufacturing, a food enzyme manufactured for food processing is used. Many enzymatic processing methods are suggested; a method of immersing a food material in an enzyme solution (Patent Document 1), a method of injecting a food material with an enzyme-containing solution and tumbling a food material (Patent Document 2), a method of applying and immersing a food material into an enzyme solution and subjecting to pressure treatment to penetrate the enzyme (Patent Document 3) or the like. However, an enzyme that is a high-molecular weight substance is not likely to penetrate into a food material differently from a seasoning that is a low molecular weight substance, therefore it is difficult to impregnate the inside of the food material with the enzyme only by immersing the shape retaining food material into an enzyme solution. So the food material excessively undergoes enzymatic degradation only on the surface, collapsing the shape. In addition, the injection method that uniformly penetrates the enzyme into a thick food material uses an injector including a number of needles. Therefore, there are problems such as remaining of needle mark, breaking of meat, shape deterioration, dripping due to massage, clogging of injectors and hygiene problems of injectors. Also, in an enzyme penetration method by applying pressure, there are problems that a protein denatures by high temperature and high pressure, and the enzymes cannot uniformly react in both the surface and the central part of the food material, because a long time requires to penetrate the enzyme into the central part of the food material even by pressure treatment as well as the immersion method.

Furthermore, while all the above processing treatments using the penetration principle by massage or dispersion is a method of penetrating an enzyme throughout the food material, there are fatal problems that the degradative enzyme reacts on not only the connective tissue protein that is known as a gristle but also myosin, actine and the like that constitute muscle fiber protein. In other word, the food material nonspecifically degraded by the degradative enzyme changes to liver-like appearance and texture, so that the shape retention is difficult, and a bitter substance is produced, and finally the food quality deteriorates. The above problems are the reasons why the enzymatic method does not become common despite the method is effective to degrade the connective tissue protein in an animal food material. To solve the above problems, usage of enzymes that do not act on the muscle fiber protein but act on only the connective tissue protein are reported (Patent Documents 4 to 7). However, these enzymes are extracted from special natural products, so that it is difficult to use a large quantity of these enzymes at this time for industrial application.

On the other hand, as a method of adding a taste to the animal food material, a method of immersing the food material in a liquid seasoning is generally practiced, and a method of penetrating a liquid seasoning with expanding the surface area by adding physical impact on the surface of the food material using a vacuum tumbler machine (Patent Document 8) or the like are reported. In addition, in these days, from the viewpoint of health, the taste improvement by a food material-derived substance not by a chemical seasoning is desired from the consumer, and taste components obtained by proteolytic enzyme reacting to the animal food material (Patent Document 9) is also known.

The present inventors have previously developed a method for producing a softened food which is retaining the original shape of the food material by impregnating a tissue of a plant food material with enzymes (Patent Document 10) and a pressure and heating method for seasoning and sterilizing without shape deterioration by impregnating a freeze-thawed plant food with the enzyme solution under reduced pressure after adjusting the salt concentration or the like of the seasoning solution (Patent Document 11). In addition, a method for producing a cooked food has also developed. It can easily carry out the above enzyme impregnation technology in the field such as a kitchen facility, and can prevent the shape deterioration during the production, transportation and distribution process of the softened food material. Moreover, it can carry out all the steps of impregnating the food material with enzymes, enzymatic reaction and heating in the same packaging container from the aspect of good hygiene. Since the above methods can impregnate the intercellular space of the plant tissue with an enzyme while retaining the shape of the plant food material, the enzyme can soften the plant food material without changing its appearance, so that the appearance and softness can be both satisfied. However, when the above treatment is carried out for an animal food material expecting the same effect, some problems such as the pigment elusion to the enzyme solution, the shape deterioration by excessive degradation on the surface of the food material, the production of bitter substance, and the liver-like changes on the texture or the like sometimes occur. These problems indicate that it is difficult to satisfy both shape retention and softening of animal food materials. This is because it is difficult to uniformly impregnate the animal food material with a enzyme as compared to the plant food material due to the difference in with or without of intercellular space, protein contents, tissue structure and so on. It is already possible for some of the food materials to satisfy both appearance and softening by the method for producing a cooked food, which is including a vacuum packaging process, mentioned above. Patent document 12 discloses the softening of animal or plant material with enzymes under reduced pressure followed by heat inactivation of the enzyme. Shape, colour, taste, smell and texture of the product are maintained. However, the further technology that can produce a softened food while retaining the original shape of the food material has been requested, so that even an elderly person who has difficulty in chewing and swallowing can eat with recognition what food he or she eats and with having a sense of satisfaction in eating. In particular, the food processing technology that can easily produce a food such as a taste and flavor improved food, a bitter taste suppressed food and an elasticity reduced food by selectively degrading the connective tissue proteins of in an animal food material has been requested.
Patent Document 1: JP H0731421
Patent Document 2: JP 2005503172
Patent Document 3: JP 2004089181
Patent Document 4: JP H08707818
Patent Document 5: JP H10327810
Patent Document 6: JP 2004016101
Patent Document 7: JP 2007014286
Patent Document 8: JP H08051957
Patent Document 9: JP 2006094756
Patent Document 10: JP 3686912B
Patent Document 11: JP 2006223122
Patent Document 12: WO 2007/088918

### Disclosure of the Invention

### Problems to be Solved by the Invention

An object of the present invention is to provide a method for producing a matured food, that can efficiently and easily producing in a short time a matured food which is softened while retaining the original shape of the food material, by uniformly impregnating the central part of the food material with a degradative enzyme, so that even an elderly person who have difficulty in chewing and swallowing or a person with gastrointestinal disease can recognize what kind of foods he or she takes and have a sense of satisfaction in eating. In particular, an object of the present invention is to provide a method for producing a matured food which is adjusted the degree of softening along with the reduction of the elasticity without liver-like deterioration and with suppressing the degradation of the muscle fiber by degrading mainly the connective tissue protein in the animal food material while retaining the original shape and color. In addition, an object of the present invention is to provide a method for producing a matured food, which enhances the satisfaction of visual palatability concomitantly with enhancements of "tenderness," "taste," "flavor" and "appearance" of the material by increasing the amino acids and peptides of umami and richness from the enzyme degradation without elution of the produced taste components, flavors and nutrients with suppressing the production of bitter components.

An object of the present invention is to provide a matured food which contains large amount of amino acids and peptides produced by degradation of proteins and is improved its digestibility and absorbability, so that even an elderly person who has difficulty in chewing and swallowing or a person with gastrointestinal disease can recognize what kind of foods he or she takes and have a sense of satisfaction in eating.

### Means for Solving the Problems

The present inventors addressed to produce a matured food that can be easily eaten by even a person who has difficulty in chewing and swallowing by means of degrading the enzyme substrate contained in the food material by the action of the degradative enzyme after uniform impregnating the inside of the food material with a degradative enzyme by pressure treatment, and finally the present inventors have found that it is more easily to impregnate with degradative enzyme along the muscle fiber of the food material by treating the food material with compressing in a volume which is smaller than that of the original food material after expanding it while retaining its shape. Moreover, the present inventors have obtained a knowledge that the food material, which is cut in a direction different from the fiber's long axis in the food material, can be impregnated with degradative enzyme because spaces between fibers are expanded by the food material expansion, whereby particularly in the animal food material, the enzyme mainly degrades connective tissue protein contained in the muscle fiber. Further, the present inventors have obtained a knowledge that by reacting the degradative enzyme at a temperature lower than the optimum temperature during maturing step, even an enzyme with low specificity of substrate, such as commercial enzyme preparation that degrades all proteins can degrade mainly the connective tissue protein in the food material without the degradation of the myofibrillary protein, so that the shape deterioration due to the excessive degradation of the food material and the production of bitter component can be suppressed. Furthermore, the present inventors have obtained a knowledge that the maturation under lower temperature than the optimum temperature using proteases as degradative enzyme can improve the taste of the food material due to the productions of amino acids and peptides having umami and richness inside the food material concurrently with suppressing the production of bitter component. In addition, the present inventors have obtained a knowledge that the compression treatment of the food material can be carried out by compressing of the food material to a smaller volume than that of the original food material by pressing at atmospheric pressure or more after the food material was vacuumed and sealed to being tight on the packaging medium. Additionally, the present inventors have a new observation that taste and flavor of the food material can be enhanced without elusion of food ingredients by impregnating the inside of the food material with a degradative enzyme along with fat and oil components. Based on the above knowledge, the present invention has been accomplished.

The present invention relates to a method for producing a matured food, as claimed in claim 1, comprising a cutting step of cutting an animal food material in a direction different from the long axis direction of a fiber in the animal food material, a degradative enzyme-impregnating step of uniformly impregnating inside of the cut animal food material with a degradative enzyme brought into contact with a surface of the animal food material by a pressure treatment and a maturing step of degrading an enzyme substrate contained in the animal food material by the action of the degradative enzyme while retaining the shape of the animal food material,
wherein the degradative enzyme-impregnating step has an expansion step of expanding the animal food material by reduced pressure treatment which is under pressure of water in the animal food material boiling or below or 0.04 MPa or below to expand the animal food material to a volume 1.05 times or more of the original animal food material with the shape retained and a compression step of compressing the expanded animal food material into a volume which is smaller than that of the original animal food material, and the maturing step comprises degrading the connective tissue protein between the muscle fibers by action of the degradative enzyme to reduce the elasticity of the animal food material.

In addition, the present invention relates to a matured food obtained by the above method for producing a matured food.

### Advantages of the Invention

The method for producing a matured food of the present invention is the effective and easy method to produce a matured food in a short time, which is softened with keeping the shape by the reaction of the degradative enzyme impregnated uniformly inside the food material, so that even an elderly person who has difficulty in chewing and swallowing or a person with gastrointestinal disease can recognize what kind of foods he or she eats and have a sense of satisfaction in eating. In particular, the present invention is the method for producing a matured food which is adjusted the degree of softening along with the reduction of the elasticity without liver-like deterioration and with suppressing the degradation of the muscle fiber by degrading mainly the connective tissue protein in the animal food material while retaining the original shape and color. In addition, the present invention is the method for producing a matured food which enhance the satisfaction of the visual palatability concomitantly with enhancements of "tenderness", "taste", "flavor" and "appearance" of the material by increasing the amino acids and peptides of umami and richness resulting from the enzyme degradation at lower temperature than that of optimum temperature, without elusion of the produced taste component, flavor and nutrient, with suppressing the production of bitter component.

In addition, the matured food of the present invention indicates that it contains large amount of amino acids and peptides resulting from degradation of proteins and improves its digestibility and absorbability, so that even an elderly person who has difficulty in chewing and swallowing or a person with gastrointestinal disease can recognize what kind of foods he or she takes and has a sense of satisfaction in eating.

### Brief Description of the Drawings

Figure 1 is a schematic showing a waveform data of a multiple integrated bite measurement of beef round in Example 1 of the method for producing a matured food of the present invention; and
Figure 2 is a schematic showing a waveform data of a multiple integrated bite measurement of beef round in Comparative Example 1-1 of conventional food.

### Best Mode for Carrying Out the Invention

The method for producing a matured food of the present invention is composed of next steps. One is a degradative enzyme-impregnating step to impregnate uniformly the inside of a food material with a degradative enzyme which has been brought into contact with the the food material surface in advance by using pressure treatment, and the other is a maturing step to degrade an enzyme substrate contained in the food material by the action of the impregnated degradative enzyme while retaining the shape of the food material. Moreover the method for producing the matured food of the present invention is characterized by having next steps in the degradative enzyme-impregnating step. One is an expansion step of expanding the food material with keeping its own shape under reduced pressure, and the next is a compression step of compressing the expanded material to smaller volume than that of the original food material.

Both plant origin and animal origin food materials can be used in the method for producing a matured food of the present invention. Specifically, the following food materials are taken as examples of the plant food materials; vegetable such as radish, carrot, burdock, bamboo shoot, cabbage, Chinese cabbage, celery, asparagus, spinach, Japanese mustard spinach or Chinese spinach, potato such as potato, sweet potato or taro, pulse such as soybean, adzuki bean, broad bean or pea, cereal, fruit such as pineapple, mushroom such as shiitake, shimeji, enokitake, nameko or matsutake, or seaweed such as wakame, kelp and hijiki. Also, the following food materials are taken as examples of the animal food materials; meat such as beef, pork and poultry, mutton, horse meat, venison, wild boar meat, goat meat, rabbit meat, whale meat, or the internal organs of it, fish such as horse mackerel, sweetfish, sardine, bonito, salmon, mackerel or tuna, shellfish such as abalone, oyster, scallop or clam, or other seafood such as shrimp, crab, squid, octopus and sea cucumber. The above food materials may be used in raw as well as cooked such as boiled, grilled, steamed and fried. However, when the cooked food is used, it is preferred to be minimally heated and cooked not to excessively denaturalize the proteins and not to lose its own flexibility. Also, minced and steamed product such as fish sausage or processed food such as pickles can be used. In particular, the animal food material such as meat, seafood, or processed food containing animal derived tissues is preferable to be used.

The above food material can be used after freeze-thawing treatment. Because the ice crystallization of the food material under freezing expands its volume and loosens its tissues, the inner air bubbles can be easily substituted for the outer enzyme solution, which allows the degradative enzyme to substitute the air bubbles of the center of the food material. The frozen food material is preferable to be used after complete thawing prior to the degradative enzyme impregnation. The freezing method of the food material is preferable to use a rapid freezing method, which can get through the ice crystal formation in a short time, to reduce a thawing drip. It means any freezing machines can be available. The frozen food material can be thawed by placing it into the running water, or by heating with a microwave oven, but the slow thawing in the refrigerator is more suitable because the thawing drip can be suppressed.

The food material may be available whatever shape it is. However, it is preferable to cut the food material in the different direction from the long axis of its fiber and to be created the cross sections of the fiber on its cutting surface, whereby the interfiber space can be expanded and the food material can be easily impregnated with degradative enzyme between the fibers on the expansion step mentioned below. As for the cutting method to cut the food material in the different direction from the long axis of its fiber, it is preferable to cut in the perpendicular direction to the long axis of its fiber. However, in the case that the direction of the fiber is not one way or not clear like a squid or octopus, it is preferable to cut the material to make the cutting surfaces large. For example, when a steak is prepared from a chunk of beef round, the beef round is cut at 2 cm intervals in which the long axis direction of the fiber becomes a thickness direction of steak, and the cut surfaces can be seen as the top and bottom surfaces of the steak. In addition, a fish fillet (cut into pieces) such as tuna, can use after cutting into a size of 3 cm long, 2 cm wide and 1 cm thickness (long axis direction) which is perpendicular to the long axis direction of the fiber. Also, the squid fillet is prepared by being cut in the vertical direction of the squid (the axial direction of the body) to be in perpendicular direction to the long axis direction of the fiber after being stripped. The food material can be cut before or after its freeze treatment, and in a case of using the frozen food material, the food material can be cut under the partially thawing condition or the completely thawing condition.

As for the degradative enzyme used in the method for producing the matured food of the present invention, any enzymes degrading protein, carbohydrate or fat can be available and chosen them accordingly depending on what treated as the food material and enzyme substrate, or how the person's conditions like. Specifically, the following enzymes are taken as examples; the enzymes that degrade protein to amino acids and peptides such as protease or peptidase, the enzymes that degrade polysaccharides like starch, cellulose, inulin, glucomannan, xylan, alginic acid or fucoidan to oligosaccharides such as amylase, glucanase, cellulase, pectinase, pectinesterase, hemicellulase, β-glucosidase, mannase, xylanase, alginate lyase, chitosanase, inulinase or chitinase, or the enzymes that degrade oil and lipids such as lipase. These enzymes can be used separately or in the combination with two or more within they do not inhibit one another. Among these enzymes, it is particularly preferable to be used protease or peptidase since they can produce the taste components such as amino acids and peptides, and they are abundantly available. In particular, animal food material can be enhanced its taste by protease or peptidase due to the increment of amino acids and peptides. Regardless of whatever origin the enzymes are, the enzymes from plants, animals, or microorganisms are used. The degradative enzyme can be used under the conditions of powder, liquid, or contained in dispersion liquid. Even the commercially available enzyme which randomly degrades protein due to the low specificity of substrate can be used because the enzyme can degrade mainly the connective tissue protein with suppressing degradations of the muscle fiber protein by reacting at lower temperature than its optimum temperature as mentioned below, whereby the production of bitter components and shape deterioration caused from excess reactions are suppressed in the method of the present invention.

The following methods can be used to bring the above degradative enzyme into contact with the food material; a method of spraying or attaching powder degradative enzyme by sprinkling it on the surface of the food material; a method of applying or sprinkling degradative enzyme solution, in which the powder enzyme or the liquid enzyme is dissolved, on the surface of the food material; or immersing the food material in the degradative enzyme solution. The degradative enzyme solution is prepared to dissolve or disperse the degradative enzyme in solvent such as water and/or alcohol, or the degradative enzyme is directly used in cases of originally liquid enzyme. It is preferable to adjust the pH of the degradative enzyme solution from 4 to 10, and especially effective to adjust to the same pH as that of the food material. To adjust the pH of the degradative enzyme solution, a pH adjuster such as organic acids, salts or phosphates can be used. The pH adjusted liquid seasoning is also used as a pH adjuster. When the food material is brought into contact with the degradative enzyme solution by immersing, the required time and temperature for immersion can apply, for example, from 1 to 20 minutes, and from 0° to 30°C.

The used amount of the degradative enzyme can be flexibly adjusted depending on the target degree of maturity as the matured food, especially on the decreasing degree of elasticity, softening degree and producing rates of taste component. When the powder degradative enzyme directly react with the food material, the used amount of the enzyme can be applied, for example, within the range of 0.001 to 1.0 g/100g of the food material. When the liquid degradative enzyme is applied, the used amount of the enzyme can be dissolved or dispersed in solvent, for example, within the range of 0.01 to 3.0% by mass.

A seasoning agent, a thickening agent such a polysaccharide thickener, a microorganism producing a viscous substance or a nutrient can be also uniformly impregnated the inside of the food material along with the degradative enzyme under pressure treatment following the contact step. While these substances can be brought into contact with the food material surface aside from the degradative enzyme in the contact step, they can also be used by mixing in the degradative enzyme solution. By impregnating the food material with the thickening agent such a polysaccharide thickener and the microorganism producing a viscous substance, the matured food can be prepared as a food for a person who has difficulty in swallowing, because the matured food prevents inner water from running out of itself during chewing.

Furthermore, in addition to these substances, fat and oil can be also used as a substrate to bring into contact with the food material. The uniformly impregnating the inside of the food material with fat and oil improves the texture of the food material, so that the matured food can easily make a bolus and swallow during chewing. The fat and oil impregnation improves the savor of the food material by the flavor components contained in the fat and oil, and makes it possible to be taken concurrently vitamins and essential nutrients such as unsaturated fatty acid contained in it. The following the fat and oils are taken as examples; an fat and oil originally contained in the food material, a specific fat and oil extracted from the food material, and other fat and oil not contained in the food material. In addition, the fat and oil is preferably used in a liquid form, an emulsified form, or even an fat and oil which is in a solid state at ordinary temperature can be used after making it into a liquid form or an emulsion by heating. Some oil such as rapeseed oil or fish oil, which contains physiological and essential nutritional unsaturated fatty acids such as linolic acid, arachidonic acid, linolenic acid, eicosapentaenoic acid or docosahexaenoic acid, can be also used. For example, melted beef tallow (body surface oil, belly oil, back oil or the like) separately prepared, or a vegetable oil such as palm oil can be applied to beef round in order to give rich savor to it.

The degradative enzyme-impregnating process in this method is a step to uniformly impregnate the inside of the food material with the degradative enzyme attached on the surface of a food material by pressure treatment. This process contains following two steps. One is a expansion step which is to expand the food material attached the degradative enzyme with retaining its shape by reduced pressure treatment, and the next is a compression step which is to compress the expanded food material into smaller volume than that of the initial volume.

The above expansion step allows the food material to be impregnated easily with the degradative enzyme attached on its surface according to expanding its interfiber space. This expansion step allows the food material to especially be expanded the interfiber space of the food material which is cut in the different direction from the log axis direction of its fiber. Especially, this step allows the muscle fiber space of the animal food material to be expanded, and makes the impregnation with the degradative enzyme easy, and finally facilitates the degradation of its connective tissues protein of muscle fibers. In this expansion step, it is preferable that the food material is expanded to 1.05 times or more of its initial volume.

In this case, the rate of volume expansion of the food material can be calculated from an integrated value using an increased value of its surface area and that of its width in the thickness direction during the expansion step.

The expansion step can be conducted as follows. A pressure-resistant container and a vacuum pump to reduce the inner pressure are required. The food material is placed in the container, and then the inner pressure is reduced 0.04 MPa or lower, or some point or lower of reduced pressure under which the water contained in the food material can boil. For the sake of impregnating the inside of the food material with degradative enzyme, it is important to adjust the rate of volume expansion of the food material and the retention time of its expansion state during the expansion step. Moreover, excessive expansion may cause the quality deterioration of the food material, especially, the elusion of its ingredients, so it is preferable that the treatment time should be adjusted depending on the variety used, its size and so on. The preferable treatment time to expand the food material to the expanding rate noted above should be, for example, about 30 seconds to 30 minutes. The expansion step can be conducted at room temperature and it also can be conducted at lower temperatures, around 10°C, so as not to deteriorate the food quality. The retention state of the reduced pressure can be released by returning to normal pressure.

The compression step following the above expansion step is a step to compress the expanded food material to the smaller volume than the initial one, and to spread the degradative enzyme from the vicinity of the fibers to throughout the fiber tissues, and to impregnate the whole of the inside of the food material with the degradative enzyme uniformly. In the compression step, it is preferable that the food material is compressed to 0.95 times or lower of its initial volume before pressure treatment.

The compression step can be conducted as follows. A soft packaging material, which can encase the food material and be so flexible to change its shape in accordance with the pressure change, and a suction machine can be used. The food material is placed in the soft packaging material, and they are pressed with the packaging material by the suction and sealed hermetically. The compression step is completed after the packaged product return to the atmospheric pressure. Any kinds of soft packaging materials may be used, however if the heat-sealing system is used for sealing it, heat resistant material is preferable. Specifically, a soft packaging material such as retort pouch packaging, which is made from polymers such as polyethylene, should be given as an example. Reduced pressure during sealing should be at 0.02 MPa or less. By pressing the food material with the soft packaging, the food material can be pressurized and compressed through the soft packaging material. The compression step can be conducted at room temperature and it also can be conducted at lower temperatures, around 10°C, so as not to deteriorate the food quality. These expansion and compression steps can be conducted with separate machines and containers, however, it is preferable to conduct both steps consecutively with a same soft packaging material, improving the drip loss from the food material and given good hygiene.

The maturing step in the method of this present invention is the step to degrade enzyme substrate which is contained in the food material by the action of the degradative enzyme with keeping the shape of the food material. When protease or peptidase is used as the degradative enzyme, protein in the food material, particularly connective tissue protein, can be degraded. This degradation loosens the connection between muscle fibers, reduces the breaking stress and compressive stress of the food material, and also reduces the back pressure stress. The elasticity can be reduced and the softness can be improved in the food material. Moreover, low molecular weight substances such as amino acids or peptides are produced by the enzymatic degradation, by which the taste of the material is improved. Furthermore, it is preferable to mature the material at lower temperature than the optimum temperature of the degradative enzyme. By maturing at lower temperature than the optimum temperature of the enzyme, even when the degradative enzyme with low substrate specificity, for example, a commercial enzyme preparation that degrades all proteins, can mainly degrade the connective tissue protein in the food material, and the degradation of the myofibrillary protein can be suppressed. As the result, the shape deterioration and the production of bitter component by the excessive degradation can be suppressed.

The maturing step is preferable to conduct under the packed conditions, in which the food material is kept sealed and maintained in the soft packaging material as it is done in the previous compression step, from the aspect of reducing the drip loss and keeping the good hygiene. Though the maturing temperature may vary depending on the material, it is preferable to adjust the temperature, at which the quality of the food material cannot be deteriorate, the excessive enzymatic degradation and the heat denaturation of the protein in the food material can be suppressed, and the oxidation of the fat and oil in the food material can be suppressed when the food material is impregnated with fat and oil. The maturing temperature should be preferably adjusted from -3°C up to 30°C. As for the maturing time, it is preferable to be adjusted depending on the amount and the sort of the degradative enzyme, the sort of the food material, the target level of elasticity, and the amount of taste component produced during the step. Therefore the maturing time can be from 30 minutes to 3 hours or so or from 1 to 20 hours or so. The maturing step can be conducted for between 16 hours to 20 hours so as not to deteriorate the food quality. When it is required to stop the maturation, the heat treatment can be used. For example, the heating at 90° to 125°C for 5 to 60 minutes is adopted, and the heating can inactivate the enzyme and sterilize the food material at the same time. When it is not desired to heat the matured food after the maturation immediately, the maturation can be remained dormant by freezing the matured food and thereafter stopped by heating.

The maturing step can be also conducted after a certain period of time, not immediately after the compression step above. In that case, the maturing step can be done along with thawing treatment after the food material is frozen in the soft packaging material in the compression step. By conducting low-temperature maturation of the food material compressed in the soft packaging material through the above compression step, even though elasticity is reduced by the action of the enzyme, especially the back pressure stress is decreased close to zero, the following effects can be expected; the elution of component and the liver-like shape deterioration can be suppressed; the production of the bitter taste component can be suppressed; the shape can be retained; the taste and flavor component can be increased; and umami and richness can be increased.

As one example of the method for producing a matured product of the present invention, the method including the following first to fifth steps can be exemplified.

The first step is a cutting process. A food material is cut in a different direction from the long axis direction of its fiber and then frozen. Alternatively, the order of the cutting process and the freezing process can be reversed. By cutting the food material, its expansion and compression efficiencies caused by the subsequent expansion and compression steps can be improved.

The second step is a process to spread a degradative enzyme or the degradative enzyme with fat and oil on the food material. A degradative enzyme solution containing the selected degradative enzyme with or without the fat and oil itself or its emulsion is spread on the surface of the food material. If the fat and oil is spread on the food material at this time, the inside of the food material can be impregnated with the degradative enzyme and the fat and oil simultaneously in the following degradative enzyme-impregnating step.

The third step is a expansion process to impregnate the food material with the degradative enzyme. By placing the food material in a sealable container which encase the food material, the food material in the sealable container is put under reduced pressure and expanded, and fine pores are produced between fibers of the food material. At this time, the degradative enzyme and the fat and oil on the surface of the food material are substituted with gas in the fine pores to penetrate between the fibers. Finally the degradative enzyme mainly penetrates spaces in the vicinity of the connective tissue protein which affects the elasticity of the food material.

The forth step is a compression process to allow the food material to be impregnate with the degradative enzyme. The food material is placed in a sealable soft package which encases the food material and vacuum-sealed, then put under the atmospheric pressure, therefore the food material is pressured and compressed entirely via the soft package, so that the degradative enzyme can be dispersed uniformly throughout the peripheral part of the fiber of the food material. The compressed food material is pressed and fixed tightly to the soft package which holds its shape change, therefore the elusion of component of the food material can be assumed in subsequent steps to the minimum.

The fifth step is a maturing process to enhance the enzyme reaction in the food material. By controlling the enzyme reaction temperature lower than its optimum temperature, for example, 30°C or lower, regardless of the optimum temperature of the degradative enzyme used, the food material can avoid the shape change, its protein denaturation, its elution of component, the excessive degradation and the bitter taste production. Then, both the reduction of elasticity and the enhancement of savor by production of amino acids and peptides can be controlled simultaneously.

The matured food of the present invention can be produced through these five steps above. It is **characterized in that** its shape is retained, its appearance is same as the initial food material, its enzyme substrate which is contained in the food material, particularly the connective tissue protein affecting the hardness of the food material is degraded to reduce elasticity, its savor is enhanced by low molecular weight substance, and softness and taste are improved. The degree of the changes in elasticity and taste can be adjustable by the amount of the degradative enzyme to be used and the storage time for the enzyme reaction. For example, as for elasticity, in the texture measurement using Tensipresser which is capable of multiple integrated bite measurement, back pressure stress of some matured food is reduced to completely zero. As for taste, the contents of both amino acids and peptides of some of the matured food are increased by tenfold. The matured food described above retains its original shape and appearance, which have no difference from a non-treated food material. Furthermore, by impregnating the inside of the food material with the fat and oil, the savor of the matured food can be improved and the matured food also can be a nutrient-fortified functional food through the impregnation with fat-soluble nutorient component. The matured food cannot only be used as an improved food of palatability but also can be used as a food for special dietary use, which is shape-retained and focused on the adjustment of softness, for a person who has difficulty in chewing and swallowing.

The matured food described above can be cooked and taken by the same method as the normal food material. Also, the matured food can be used as a new food processing material for various processed foods such as prepared food, retort pouch food, frozen food, vacuum cooking food and canned food.

### Examples

The present invention will be described in detail based on Examples below, and the technical scope of the present invention is not limited to these Examples.

### [Example 1]

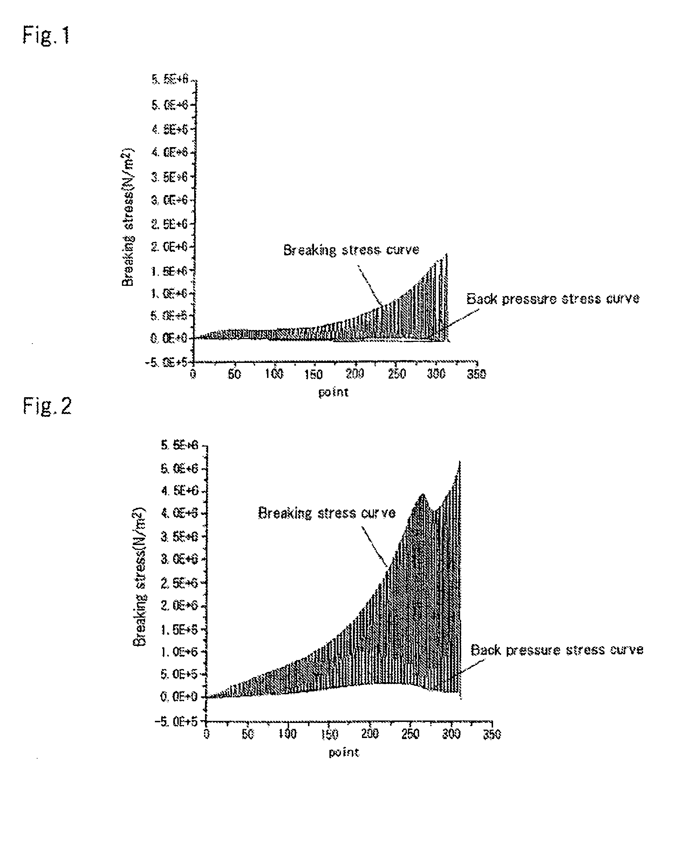

A chunk of beef round from Australia was frozen in a freezer at -30°C. The meat completely frozen was partially thawed with using a microwave (National NE-SV30HA) and cut in a direction perpendicular to the long axis of its muscle fibers. With a cutting interval of 1.5 cm, a beef round steak with a maximum longitudinal width of 10 cm, a maximum horizontal width of 7 cm and a thickness of 1.5 cm was prepared. The prepared steak was completely thawed in the refrigerator. After the thawed beef round was immersed for 1 minute in an enzyme solution having a protease activity (Protease N "Amano" G, manufactured by Amano Enzyme, Inc.), which was adjusted to 0.5% by mass with using a phosphate buffer solution (pH 5.8), it was taken out and encased in a packaging container. The the container was placed under reduced pressure at 0.01 MPa and hold for 1 minute with the food material expanded. Thereafter, the condition under reduced pressure was awaked, and the degree of vacuum was again increased to make a pressure of 0.01 MPa. Then, the container was sealed with a heat sealer with keeping the reduced pressure, and the pressure was returned to normal pressure, to compress the food material. The food material was refrigerated and allowed to stand for 20 hours, and finally a matured food was obtained. The matured food maintained the original shape and appearance without the elution of component, the shape deterioration and discoloration. The matured beef round was cooked for 70 seconds in the top side and 100 seconds in the back side on a hot plate heated to 220°C. A texture of the cooked beef round was analyzed by multiple integrated bite measurement with using Tensipresser (manufactured by Taketomo Electric, Inc.). The waveform data obtained by multiple integrated bite measurement is shown in Figure 1. In addition, the matured beef round was homogenized and water-soluble protein contained in the meat was extracted with water. Thereafter, the amount of peptide with a molecular weight of 10,000 Da or lower was measured with using a spectrophotometer by Lowry method.

### [Comparative Example 1-1]

The beef round cut in the same manner as in Example 1 was cooked in the same manner as in Example 1 without enzymatic treatment. The cooked untreated beef round was analyzed by multiple integrated bite measurement. The resulting waveform data is shown in Figure 2. The untreated beef round was also measured the amount of peptide with a molecular weight of 10,000 Da or lower.

### [Comparative Example 1-2]

The beef round cut in the same manner as in Example 1 was immersed for 20 hours in the enzyme solution that was same as the one used in Example 1, and then cooked in the same manner as in Example 1. The obtained enzyme immersed beef was measured the amount of peptide with a molecular weight of 10,000 Da or lower.

The waveform data (Figure 1 and Figure 2), shows that the maximum breaking stress (Tenderness) of the matured beef round (Example 1) decreased to one third as compared to the untreated beef round (Comparative Example 1-1), and the integrated area of the breaking stress curve (Toughness) decreased to about one forth. It is realized that the matured beef round was softened. In addition, the back pressure stress decreased to almost zero value, the elasticity decreased, and the matured beef round could be easily bit and was enough soft to be cut with chopsticks. Furthermore, the amount of peptide contained in the matured beef round increased to 2.7 g/100 g which is 4.5 times of 0.6 g/100 g contained in the untreated beef round. While the amount of the peptide in the beef round immersed in the enzyme (Comparative Example 1-2) increased to 3.4 g/100 g, the quality deterioration caused by pigment elution and shape deterioration occurred. Though the connective tissue protein of the matured beef round is completely degraded, the myofibril itself in the muscle fiber was hardly degraded. The palatability of the cooked matured beef round was enhanced by the increment of umami which was obtained with the synergistic effects of both the meat juice from the muscle fiber during chewing and the amino acid and peptide produced by the degradation of the connective tissue protein.

### [Example 2]

A chicken breast fillet was frozen in a freezer at -30°C. The completely frozen chicken breast fillet was partially thawed in the refrigerator and cut in the direction perpendicular to the long axis of its muscle fibers. With a cutting interval of 1.0 cm, a chicken breast slice with a maximum longitudinal length of 5 cm, a maximum horizontal length of 1.5 cm and a thickness of 1.0 cm was prepared. The prepared chicken breast fillet was completely thawed in the refrigerator. After the thawed chicken breast fillet was immersed for 5 minutes in an enzyme solution having a protease activity (Bromelain F, manufactured by Amano Enzyme, Inc.), which was adjusted to 0.5% by mass with using a phosphate buffer solution (pH 5.8). It was taken out and encased in a packaging container. The container was placed under reduced pressured at 0.01 MPa and hold for 5 minutes with the food material expanded. Thereafter, the condition under the reduced pressure was awaked, and the degree of vacuum was again increased to make a pressure of 0.01 MPa. Then, the container was sealed with a heat sealer with keeping the reduced pressure, and the pressure was returned to normal pressure, to compress the food material. The food material was refrigerated and allowed to stand for 1 hour, and finally a matured food was obtained. The matured food maintained the original shape and appearance without the elution of component, the shape deterioration and discoloration. The matured chicken breast fillet was cooked for 5 minutes in boiling water. The matured chicken breast fillet was homogenized and a water-soluble protein contained in the matured chicken breast fillet was extracted with water. Thereafter, the amount of peptide with a molecular weight of 10,000 Da or lower was measured with using a spectrophotometer by Lowry method.

### [Comparative Example 2-1]

The chicken breast fillet cut in the same manner as in Example 2 was cooked in the same manner as in Example 1 without enzyme treatment. The obtained chicken breast fillet without enzyme treatment was also measured the amount of peptide with a molecular weight of 10,000 Da or lower.

### [Comparative Example 2-2]

The chicken breast fillet cut in the same manner as in Example 2 was immersed for 1 hour in the enzyme solution that was same as the one used in Example 2, and then cooked in the same manner as in Example 2. The obtained enzyme immersed chicken breast fillet was measured the amount of peptide with a molecular weight of 10,000 Da or lower.

As a result of comparing the peptide amount, while the amount of the peptide contained in the untreated chicken breast fillet (Comparative Example 2-1) was 0.2 g/100 g, that of the matured chicken breast fillet (Example 2) increased to 2.3 g/100 g, and that of the enzyme immersed chicken breast fillet (Comparative Example 2-2) increased to 1.3 g/100 g. While the matured chicken breast fillet retained the own shape and had no change in appearance compared with the untreated chicken breast fillet, the enzyme immersed chicken breast fillet had an elution on its surface due to the excessive enzymatic degradation. The palatability of the cooked matured chicken breast fillet was enhanced by the softness and increment of umami.

### [Example 3]

A Japanese flying squid was frozen in a freezer at -30°C. The squid completely frozen was partially thawed with using a microwave (National NE-SV30HA) and cut in a longitudinal direction perpendicular to the long axis of the muscle fiber. With a cutting interval of 0.5 cm, a squid fillet with a maximum longitudinal length of 10 cm, a maximum horizontal length of 0.5 cm and a thickness of 0.5 cm was prepared. The prepared squid fillet was completely thawed in the refrigerator. After the thawed squid fillet was immersed for 1 minute in an enzyme solution having a protease activity (Papain W-40, manufactured by Amano Enzyme, Inc.), which was adjusted to 0.5% by mass with using a phosphate buffer solution (pH 5.8), it was taken out and encased in a packaging container. The container was placed under reduced pressure at 0.01 MPa and hold for 1 minute with the food material expanded. Thereafter, the condition under reduced pressure was awaked, and the degree of vacuum was again increased to make a pressure of 0.01 MPa. Then, the container was sealed with a heat sealer with keeping the reduced pressure, and the pressure was returned to normal pressure, to compress the food material. The food material was refrigerated and allowed to stand for 16 hours, and finally a matured food was obtained. The matured food maintained the original shape and appearance without the elution of component, the shape deterioration and discoloration. The matured squid fillet was cooked for 5 minutes in boiling water. A texture of the cooked squid fillet was analyzed by onbite measurement with using Tensipresser (manufactured by Taketomo Electric, Inc.). For details, the texture was measured according to a measurement method of food for special dietary uses adopted by the Ministry of Health, Labour and Welfare, and the texture was analyzed with following parameters; plunger diameter 3 mm; deformation 70%; and bite speed 10 mm/sec.

### [Comparative Example 3]

The squid fillet cut in the same manner as in Example 3 was cooked in the same manner as in Example 3 without enzyme treatment. The texture of the cooked squid fillet was analyzed in the same manner.

While the texture value (maximum breaking stress value) of the untreated squid fillet (Comparative Example 3) was 9.0 × 10⁵N/m², the value of the matured squid fillet (Example 3) was decreased to 4.4 × 10⁵N/m² in nearly one half of the untreated squid fillet. It is thought that the hardness of the squid fillet is particularly correlated with the maximum breaking stress during chewing, and actually, it was enough soft to bite the matured squid fillet off. In the hardness class of universal design food established by Japan Care Food Conference, the matured squid fillet had the hardness corresponding to class 1, which indicated the matured squid fillet was easy to bite.

### [Example 4-1]

A chunk of pork ham was frozen in a freezer at -30°C. The chunk of pork ham completely frozen was partially thawed with using a microwave (National NE-SV30HA) and cut in a direction perpendicular to the long axis of its muscle fibers. With a cutting interval of 1.0 cm, a pork ham slice with a maximum longitudinal length of 5.0 cm, a maximum horizontal length of 3.0 cm and a thickness of 1.0 cm was prepared. The prepared pork ham was completely thawed in the refrigerator. After the thawed pork ham was immersed for 1 minute in an enzyme solution having a protease activity (Protease N "Amano" G, manufactured by Amano Enzyme, Inc.), which was adjusted to 0.5% by mass with using a phosphate buffer solution (pH 5.8), it was taken out. Next, pork oil was prepared. The pork oil collected during the preparation of the pork ham was warmed to dissolve and thereafter cooled to 40°C. This pork oil was spread on the surface of the pork ham brought into contact with enzyme and the pork ham was encased in a packaging container. The container was placed under reduced pressure at 0.01 MPa and hold for 3 minutes with the food material expanded. Thereafter, the condition under reduced pressure was awaked, and the degree of vacuum was again increased to make a pressure of 0.01 MPa. Then, the container was sealed with a heat sealer with keeping the reduced pressure, and the pressure was returned to normal pressure, to compress the food material. The food material was refrigerated and allowed to stand for 20 hours, and finally a matured food was obtained. The surface of the matured food was thinly covered with the solidified pork oil and the matured food maintained the original shape and appearance without the elution of component, the shape deterioration and discoloration. The matured pork ham was cooked for 70 seconds in the top side and 100 seconds in the back side on a hot plate heated to 220°C. A sensory test was carried out on the cooked pork ham by 5 panels. The sensory test was carried out for the items of appearance, dripping and pigment elution, softness, taste and flavor by 5-point scale. The each score was given as 5: very good, 4: good, 3: fair, 2: slightly bad and 1: bad, and the score by each panel was averaged out to evaluate.

### [Example 4-2]

The same procedures were conducted as in Example 4-1 except that the application of fat and oil was not carried out, to prepare a matured pork ham. The matured pork ham was cooked and subjected to the sensory test.

### [Comparative Example 4-1]

The pork ham cut in the same manner as in Example 4 was immersed for 20 hours in the enzyme solution that was same as the one used in Example 4 and cooked in the same manner as in Example 4 and subjected to the sensory test.

### [Comparative Example 4-2]

The pork ham cut in the same manner as in Example 4 was cooked in the same manner as in Example 4 without enzyme treatment and subjected to the sensory test.

The result of the sensory evaluation is shown in Table. Because the enzyme immersed pork ham (Comparative Example 4-1) was immersed in the enzyme solution for a long time, the pork ham surface reacted excessively, and melted down, pigment was eluted into the enzyme solution accompanied with the shape deterioration, and meat color faded away. It tasted bitterer and had no pork-like savor. Therefore, the score was lowest. On the hand, the evaluation of the matured pork ham to which the pork oil was added (Example 4-1) was highest score; all items got the highest evaluation. While the matured pork ham added no fat and oil (Example 4-2) also got high evaluation and was enough palatable. In the case of adding fat and oil, the matured pork ham surface was shinny with oil film, appearance was further improved, and a pork-like savor was also further improved. The matured pork ham added fat and oil had a characteristic that it was likely to form a bolus of food after chewing and also likely to be swallowed.

**[Table]**

| Sensory Test Item | Example 4 | Comparative Example 4-1 | Comparative Example 4-2 | Comparative Example 4-3 |
|---|---|---|---|---|
| | Matured Pork Ham to Which Fat and Oil Was Added | Matured Pork Ham to Which No Fat and Oil Was Added | Pork Ham Immersed in Enzyme | Untreated Pork Ham |
| Appearance (External Appearance) | 4.0 | 3.8 | 1.6 | 3.2 |
| Dripping and Pigment Elution | 4.6 | 4.4 | 1.6 | 2.8 |
| Softness and Elasticity | 4.8 | 4.8 | 4.2 | 3.0 |
| Taste | 4.4 | 4.4 | 1.4 | 3.2 |
| Flavor | 4.8 | 3.8 | 1.8 | 3.4 |
| Overall Evaluation | 4.5 | 4.2 | 2.1 | 3.1 |

### Industrial Applicability

The method for producing a matured food in the present invention can efficiently and readily produce in a short time a matured food which retains the original shape of the food material while having a low elasticity, so that it can be recognized what food is taken, the matured food can be taken with a sense of satisfaction, and the matured food can be suitably utilized for care food for an elderly person who has difficulty in chewing and swallowing and a person with gastrointestinal disease. In particular, mainly the connective tissue protein in the animal food material is degraded by the action of the degradative enzyme and the degradation of the muscle fiber is suppressed while retaining the original shape and color, and thereby inhibiting the animal food material from being degraded like a liver, suppressing the production of bitter component, having umami and richness, and suppressing the loss of flavor and nutrient, to improve "softness," "taste," "flavor" and "appearance," so that the matured food in which visual palatable satisfaction is improved can be produced and is very useful as nursing care food.

## Claims

1. A method for producing a matured food comprising a cutting step of cutting an animal food material in a direction different from the long axis direction of a fiber in the animal food material, a degradative enzyme-impregnating step of uniformly impregnating inside of the cut animal food material with a degradative enzyme brought into contact with a surface of the animal food material by a pressure treatment and a maturing step of degrading an enzyme substrate contained in the animal food material by the action of the degradative enzyme while retaining the shape of the animal food material,
wherein the degradative enzyme-impregnating step has an expansion step of expanding the animal food material by reduced pressure treatment which is under pressure of water in the animal food material boiling or below or 0.04 MPa or below to expand the animal food material to a volume 1.05 times or more of the original animal food material with the shape retained and a compression step of compressing the expanded animal food material into a volume which is smaller than that of the original animal food material, and the maturing step comprises degrading the connective tissue protein between the muscle fibers by action of the degradative enzyme to reduce the elasticity of the animal food material.

2. The method for producing a matured food according to claim 1, comprising, in the compression step, encasing the animal food material in a soft packaging material, bringing the soft packaging material into close contact with the animal food material by suction, sealing off the soft packaging material, and exposing the packaged animal food material to atmospheric pressure.

3. The method for producing a matured food according to any of claims 1 to 2, comprising, in the maturing step, allowing the degradative enzyme to act at a temperature lower than the optimum temperature.

4. The method for producing a matured food according to any of claims 1 to 3, wherein the degradative enzyme comprises protease, and comprising, in the maturing step, producing an amino acid and peptide in the animal food material by the action of the protease to enhance taste components.

5. The method for producing a matured food according to any of claims 1 to 4, comprising, prior to the degradative enzyme-impregnating step, bringing a fat and oil into contact with the surface of the animal food material.

6. The method for producing a matured food according to any of claims 1 to 5, comprising, prior to the expansion step, freezing and thawing the animal food material.

7. The method for producing a matured food according to any of claims 1 to 6, comprising, upon bringing the degradative enzyme into contact with the animal food material, applying or spraying a degradative enzyme solution to the animal food material, or immersing the animal food material in the degradative enzyme solution, or attaching or spraying a degradative enzyme powder to the animal food material.

8. A matured food obtained by the method for producing a matured food according to any of claims 1 to 7.

## Patentansprüche

1. Verfahren zur Herstellung von gereiften Nahrungsmitteln, aufweisend einen Schneideschritt, bei welchem man ein Tiernahrungsmittelmaterial in einer anderen Richtung schneidet als der Längsachsenrichtung einer Faser im Tiernahrungsmittelmaterial, einen degradativen Enzym-Imprägnierungsschritt, bei dem man das Innere des geschnittenen Tiernahrungsmittelmaterials gleichförmig mit einem degradativen Enzym imprägniert, welches mit einer Oberfläche des Tiernahrungsmittelmaterials durch eine Druckbehandlung in Berührung gebracht wurde und einen Reifungsschritt, bei dem man ein Enzym-Substrat, welches im Tiernahrungsmittelmaterial enthalten ist, durch die Wirkung des degradativen Enzyms abbaut, während die Form des Tiernahrungsmittelmaterials beibehalten wird,
wobei der degradative Enzym-Imprägnierungsschritt einen Expansionsschritt umfasst, bei dem das Tiernahrungsmittelmaterial durch eine Behandlung mit reduziertem Druck expandiert wird, welche unter einem Druck im Tiernahrungsmittelmaterial von siedendem Wasser oder darunter oder 0,04 MPa oder darunter vollzogen wird, um das Tiernahrungsmaterial auf das 1,05-fache Volumen oder mehr des urspünglichen Tiemahrungsmittelmaterials unter Erhalt der Form zu expandieren, und einen Kompressionsschritt, bei dem das expandierte Tiernahrungsmittelmaterial auf ein Volumen komprimiert wird, welches kleiner ist als das des ursprünglichen des Tiernahrungsmittelmaterials, und der Reifungsschritt den Abbau des Bindegewebeproteins zwischen den Muskelfasern durch Wirkung des degradativen Enzyms umfasst, um so die Elastizität des Tiernahrungs-mittelmaterials zu verringern.

2. Verfahren zur Herstellung eines gereiften Nahrungsmittels nach Anspruch 1, aufweisend im Kompressionschritt das Einhüllen des Tiernahrungsmittelmaterials in einem weichen Verpackungsmaterial, dass man das weiche Verpackungsmaterial durch Absaugen in engen Kontakt mit dem Tiernahrungsmittelmaterial bringt, dass man das weiche Verpackungsmaterial versiegelt, und dass man das verpackte Tiernahrungsmittelmaterial atmosphärischem Druck aussetzt.

3. Verfahren zur Herstellung eines gereiften Nahrungsmittels nach einem der Ansprüche 1 bis 2, bei dem man es im Reifungsschritt zulässt, dass das degradative Enzym bei einer geringeren Temperatur als der optimalen Temperatur wirkt.

4. Verfahren zur Herstellung eines gereiften Nahrungsmittels nach einem der Ansprüche 1 bis 3, wobei das degradative Enzym Protease aufweist, und dass im Reifungsschritt eine Aminossäure und Peptide im Tiernahrungsmittelmaterial durch die Wirkung der Protease zur Verbesserung der Geschmackskomponenten produziert werden.

5. Verfahren zur Herstellung eines gereiften Nahrungsmittels nach einem der Ansprüche 1 bis 4, umfassend, dass man vor dem degradativen Enzym-Imprägnierungsschritt ein Fett und Öl in Kontakt mit der Oberfläche des Tiernahrungsmittelmaterials bringt.

6. Verfahren zur Herstellung eines gereiften Nahrungsmittel nach einem der Ansprüche 1 bis 5, aufweisend, dass man vor dem Expansionsschritt das Tiernahrungsmittelmaterial friert und auftaut.

7. Verfahren zur Herstellung eines gereiften Nahrungsmittels nach einem der Ansprüche 1 bis 6 umfassend, dass man beim in Kontakt bringen des degradativen Enzyms mit dem Tiernahrungsmittelmaterial eine degradative Enzymlösung auf das Tierfuttermittelmaterial aufbringt oder sprüht, oder das Tierfuttermittelmaterial in die degradative Enzymlösung taucht, oder ein degradatives Enzympulver auf das Tiernahrungsmittelmaterial aufbringt oder sprüht.

8. Ein gereiftes Nahrungsmittel, erhalten nach dem Verfahren zur Herstellung eines gereiften Nahrungsmittels gemäß einem der Ansprüche 1 bis 7.

## Revendications

1. Procédé de production d'un aliment maturé, comprenant une étape de découpe consistant à découper un matériau alimentaire animal dans une direction différente de la direction de l'axe longitudinal d'une fibre dans le matériau alimentaire animal, une étape d'imprégnation par une enzyme de dégradation consistant à imprégner l'intérieur du matériau alimentaire animal découpé avec une enzyme de dégradation mise en contact avec une surface d'un matériau alimentaire animal par un traitement par pression et une étape de maturation consistant à dégrader un substrat enzymatique contenu dans le matériau alimentaire animal par l'action de l'enzyme de dégradation tout en conservant la forme du matériau alimentaire animal,
dans lequel l'étape d'imprégnation avec une enzyme de dégradation a une étape de dilatation consistant à dilater le matériau alimentaire animal par un traitement à une pression réduite qui est inférieure à la pression de l'eau dans le matériau alimentaire animal en ébullition, ou inférieure ou de 0,04 MPa ou inférieure pour dilater le matériau alimentaire animal à un volume de 1,05 fois ou plus celui du matériau alimentaire animal, la forme étant conservée, et une étape de compression consistant à comprimer le matériau alimentaire animal dilaté en un volume qui est inférieur à celui du matériau alimentaire animal d'origine, et l'étape de maturation comprend la dégradation des protéines du tissu conjonctif entre les fibres musculaires par l'action de l'enzyme de dégradation pour réduire l'élasticité du matériau alimentaire animal.

2. Procédé de production d'un aliment maturé selon la revendication 1, comprenant, à l'étape de compression, l'emballage du matériau alimentaire animal dans un matériau d'emballage souple, la mise en contact étroit du matériau d'emballage souple avec le matériau alimentaire animal par aspiration, le scellement du matériau d'emballage souple et l'exposition du matériau alimentaire animal emballé à la pression atmosphérique.

3. Procédé de production d'un aliment soumis à maturation selon l'une quelconque des revendications 1 à 2, comprenant, à l'étape de maturation, l'action de l'enzyme de dégradation à une température inférieure à la température optimale.

4. Procédé de production d'un aliment soumis à maturation selon l'une quelconque des revendications 1 à 3, dans lequel l'enzyme de dégradation comprend une protéase, et comprenant, à l'étape de maturation, la production d'un acide aminé et d'un peptide dans le matériau alimentaire animal par l'action de la protéase pour renforcer les composants gustatifs.

5. Procédé de production d'un aliment soumis à maturation selon l'une quelconque des revendications 1 à 4, comprenant, avant l'étape d'imprégnation par une enzyme de dégradation, la mise en contact d'une matière grasse et d'une huile avec la surface du matériau alimentaire animal.

6. Procédé de production d'un aliment soumis à maturation selon l'une quelconque des revendications 1 à 5, comprenant, avant l'étape de dilatation, la congélation et la décongélation du matériau alimentaire animal.

7. Procédé de production d'un aliment soumis à maturation, selon l'une quelconque des revendications 1 à 6, comprenant, lors de la mise en contact de l'enzyme de dégradation avec le matériau alimentaire animal, l'application ou la pulvérisation d'une solution d'enzyme de dégradation sur le matériau alimentaire animal ou l'immersion du matériau alimentaire animal dans la solution d'enzyme de dégradation ou l'immersion du matériau alimentaire animal dans la solution d'enzyme de dégradation ou la fixation ou la pulvérisation d'une poudre d'enzyme de dégradation sur le matériau alimentaire animal.

8. Aliment soumis à maturation obtenu par le procédé de production d'un aliment soumis à maturation selon l'une quelconque des revendications 1 à 7.
